# EUROPÄISCHE PATENTSCHRIFT

(11) **EP 2 991 942 B1**
(45) Veröffentlichungstag und Bekanntmachung des Hinweises auf die Patenterteilung: **10.05.2017**
(21) Anmeldenummer: 14726066.5
(22) Anmeldetag: 10.04.2014
(51) Int. Cl.: C03C 8/24, C03C 14/00, H01M 8/02, H01M 8/12

(54) **VERFAHREN ZUR HERSTELLUNG EINER GLASLOT-GRÜNDICHTUNG**
METHOD FOR PRODUCING A SOLDER GLASS GREEN SEAL
PROCÉDÉ DE PRODUCTION D'UN JOINT VERT EN VERRE DE SCELLEMENT

(30) Priorität: 03.05.2013 DE 102013007703
(43) Veröffentlichungstag der Anmeldung: 09.03.2016
(73) Patentinhaber: Forschungszentrum Jülich GmbH, 52425 Jülich (DE)
(72) Erfinder: FEDERMANN, Dirk, 47623 Kevelaer (DE); ZERFASS, Hans-Rainer, 65232 Taunusstein (DE); GROSS-BARSNICK, Sonja-Michaela, 52070 Aachen (DE)
(86) Internationale Anmeldenummer: PCT/DE2014/000189
(87) Internationale Veröffentlichungsnummer: WO 2014/177125

(56) Entgegenhaltungen:
- EP-A1- 0 043 955
- EP-A2- 1 174 766
- WO-A1-00/59839
- WO-A1-99/36901
- WO-A1-99/54131
- WO-A1-03/103358
- GB-A- 2 180 990
- US-A- 5 294 567
- US-A1- 2005 147 866
- US-A1- 2009 061 282

## Beschreibung

Die Erfindung bezieht sich auf ein Verfahren zur Herstellung einer Glaslot-Gründichtung.

### Stand der Technik

Glaslote werden im Stand der Technik unter anderem zur Abdichtung zwischen Bauteilen und zur elektrischen Isolation verwendet. Im industriellen Bereich werden Glaslote z. B. in der Photovoltaik oder in der Brennstoffzellentechnologie verwendet. Die geschmolzenen Glaslote werden dort genutzt um Einzelzellen und andere Bauelemente in Serie zu schalten und elektrisch wie mechanisch gasdicht voneinander zu separieren. Hierunter fallen z. B. metallische oder keramische Interkonnektoren, Zellen und die Grund- und die Deckplatten.

Geläufige Verfahren zum Aufbringen eines Glaslots auf ein Substrat sind das Siebdruckverfahren, Dispenserverfahren und das Foliengießverfahren. Bei einem Siebdruck wird allgemein gesprochen die Druckfarbe mit einer Gummirakel durch ein feinmaschiges Gewebe hindurch auf das zu bedruckende Material gedruckt. An denjenigen Stellen des Gewebes, wo dem Druckbild entsprechend keine Farbe gedruckt werden soll, werden die Maschenöffnungen des Gewebes durch eine Schablone farbundurchlässig gemacht. Die Technik wurde bei der Herstellung von Brennstoffzellenstacks und für die Herstellung von Photovoltaischen Zellen bereits veröffentlicht.

Es ist auch bekannt, keramische Grünfolien mit Hilfe des Foliengießverfahrens herzustellen. Aus der US 2009/0004544 A1 ist bekannt, aus solchen Folien durch Ausstanzen Gründichtungen herzustellen.

Die Folienherstellung mit Hilfe des Gießverfahrens ist nachteilig relativ aufwändig, und das benötigte Stanzwerkzeug ist deutlich teurer als ein Siebdrucksieb. Die eigentliche Dichtung hat nur einen geringen Flächenanteil an der im Stanzprozess eingesetzten Folie, und der Großteil der Paste fällt nachteilig als Stanzabfall an. Dieser Abfall ist auch nur bedingt wieder verwendbar, da einmal für die Rezepturkonstanz immer der gleiche Anteil eingesetzt werden muss und andererseits die Aufbereitung des Abfalls besondere Maßnahmen erfordert. Wenn eine auf dem Markt erhältliche Folie eingesetzt werden soll, ist in der Regel deren Rezeptur nicht bekannt. Ein Vergleich der Kosten, die bei der Herstellung von Gründichtungen bei beiden Verfahren anfallen, zeigt, dass das Foliengießverfahren teurer ist als das Siebdruckverfahren.

Der Nachteil des Siebdruckverfahrens ist, dass unebene Formen mit der Paste schwer zu bedrucken sind, da keine einheitliche Schichtdicke erzeugt werden kann. Dieser Nachteil fällt besonders in das Gewicht, wenn dicke Schichten auf ein Bauteil zur Verbindung mit einem anderen Bauteil aufgetragen werden.

### Aufgabe der Erfindung

Aufgabe der Erfindung ist es ein Verfahren zur Herstellung einer Glaslot-Gründichtung anzugeben, mit dem gleichmäßig dicke, mechanisch flexible, handhabbare Glaslot-Gründichtungen erzeugt werden, wobei deren Schichtdicke mindestens 100 µm betragen soll. Diese Schichtdicke ist somit bezogen auf die Dicke nach der Austreibung des Lösungsmittels aus der Paste und vor der Verbrennung des Binders aus der Paste.

### Lösung der Aufgabe

Die Aufgabe wird gelöst mit dem Verfahren nach Patentanspruch 1, sowie der Glaslotpaste nach den Nebenansprüchen. Vorteilhafte Ausgestaltungen hierzu ergeben sich aus den hierauf rückbezogenen Patentansprüchen.

### Beschreibung der Erfindung

Bei dem erfindungsgemäßen Verfahren zur Herstellung einer Glaslot-Gründichtung wird eine Glaslotpulver aufweisende Paste auf die Oberfläche eines Siebs aufgetragen, welches an seiner Unterseite und in den Siebmaschen Bereiche mit einer für die Paste undurchlässigen Beschichtung aufweist. Die Paste wird durch das Sieb auf ein Substrat gedrückt und anschließend getrocknet. Der Druck erfolgt auf einen Zwischenträger als Substrat, von dem sich die getrocknete Glaslot-Gründichtung vollständig ablösen lässt.

Vorteilhaft bewirkt die Beschichtung des Siebs, dass erstens nur diejenigen Bereiche des Zwischenträgers bedruckt werden, an denen die Beschichtung nicht vorhanden ist. Die Beschichtung am Sieb dient als Maske für das Siebdruckverfahren. Zweitens dient die Beschichtung des Siebs vorteilhaft als ein Abstandhalter zwischen Substrat und Sieb, mit der die Dicke der Glaslot-Gründichtungen in Abhängigkeit der geplanten Anwendung erhöht wird. Es muss entsprechend ein Material für die Beschichtung gewählt werden, das formstabil und abriebfest während des Siebdruckverfahrens ist, so dass eine ausreichend hohe Schichtdicke erzeugt wird. Das Material ist zudem vorzugsweise für die angewendeten Lösungsmittel in der Paste resistent.

Die Gesamtdicke der auf den Zwischenträger aufgetragenen Paste erhöht sich dann proportional zu der Dicke der Beschichtung am Sieb. Die Dicke der auf den Zwischenträger aufgetragenen Glaslotpaste ergibt sich von der Oberkante der Siebfäden, auf der die Paste aufgetragen wird, bis zur Unterkante der Beschichtung auf der gegenüberliegenden Seite des Siebs, welche auf dem Zwischenträger aufliegt. Sind beispielweise die Fäden des Siebs 150 µm im Querschnitt dick, so ergibt sich eine Gesamtfadendicke von etwa 300 µm. Ist die Beschichtung des Siebs von der Unterseite gemessen zusätzliche 300 µm dick, ergibt sich ein Pastenauftrag von maximal 600 µm Dicke auf dem Zwischenträger. Nach dem Druck ist die Paste noch nass. Die Dicke auf dem Zwischenträger entspricht nicht genau der Siebgesamtdicke, sondern wird durch die offene Fläche des Siebes mit bestimmt.

Die Beschichtung des Siebs an der Unterseite soll vorzugsweise mindestens 100 µm dick sein. Sie kann 200 µm, 300 µm, 400 µm, 500 µm, 600 µm bzw. 700 µm dick sein, und im Übrigen jeden Zwischenwert annehmen. Sie kann also entsprechend 101 µm, 102 µm, 103 µm bis 698 µm, 699 µm, 700 µm annehmen.

Besonders vorteilhaft sollte die Beschichtung von der Sieboberfläche aus gemessen etwa zusätzliche 300 µm bis 500 µm dick sein. Durch die Beschichtung wird vorteilhaft bewirkt, dass reproduzierbar, trockene Glaslot-Gründichtungen mit mindestens 100 µm und insbesondere mit mehr als 300 µm bis 400 µm und sogar insbesondere bis zu 600 µm Dicke, gegebenenfalls sogar dicker, hergestellt werden können.

Erfindungsgemäß wird eine Gründichtung mit einem derartig modifizierten Verfahren unter Kombination verschiedener weiterer Maßnahmen hergestellt. Der Siebdruck erfolgt im ersten Schritt auf diesen Zwischenträger als Substrat.
Zur Erzielung von Trockenschichtdicken von 400 µm, vorzugsweise 400 µm bis 800 µm und darüber, sollte das Siebdruckverfahren mit einem besonders grobmaschigen Sieb durchgeführt werden, damit eine Paste mit hohem Festkörperanteil, welche dadurch bedingt relativ hochviskos ist, überhaupt in ausreichender Menge die Siebmaschen passieren kann. Um die gewünschte Schichtdicke überhaupt zu erreichen, sollte das Sieb jedenfalls auf der Unterseite die zusätzliche Beschichtung mit vorzugsweise 300 - 500 µm Dicke aufweisen, wiederum gemessen von der Sieboberfläche aus.

Die Beschichtung des Siebs kann vorzugsweise aus einem herkömmlichen Fotolack bestehen. Derartige Fotolacke sind branchenüblich verfügbar und bilden eine fest mit den Siebfäden verbundene Schicht. An den Stellen, an denen der Fotolack auf dem Sieb und in den Siebmaschen die Siebmaschen verschließt, kann die Glaslotpaste das Sieb nicht passieren. Vorteilhaft bewirkt der Fotolack, dass eine Maske auf und im Sieb hergestellt werden kann, die im Weiteren die Passage der Glaslotpaste verhindert. Für die Herstellung des Siebs wird der Fachmann auf die üblichen Verfahren der Siebherstellung zurückgreifen.

Das Sieb wird in Abhängigkeit der Anwendung und den Vorstellungen des Anwenders hergestellt. Die Vorgaben betreffen dabei hauptsächlich die Gewebemaße und die EOM-Schichtdicke. Die Einzelheiten der Siebherstellung wie die Spanneinrichtung für das Siebgewebe, der Klebstoff zum Aufkleben des gespannten Siebgewebes auf den Rahmen, Handelsbezeichnung des Fotolacks, Trocknungsbedingungen für den Fotolack, Belichtungseinrichtung für das mit Fotolack beschichtete Sieb, die Lichtquelle und so weiter, sind dem Fachmann bekannt. Die Vorgehensweise zur Aufbringung einer ausreichend dicken EOM-Schicht (EOM: Emulsion over mesh) ist dem Fachmann bekannt.

Je nach der Dicke der Beschichtung bzw. der Dicke eines Fotolacks und der Dicke der Fäden des Siebs wird bewirkt, dass entsprechend des Siebs Druckbilder aus Paste in Form von Glaslot-Gründichtungen mit hoher Dicke auf dem Substrat-Zwischenträger erzeugt werden.

Es wird ein Zwischenträger, insbesondere eine Kunststofffolie oder eine Metallfolie als erstes Substrat für die Paste verwendet. Es kann ebenfalls handelsübliches, beschichtetes Backpapier als Zwischenträger verwendet werden. Während des Verfahrens wird vorteilhaft diese Folie als Zwischenträger bzw. erstes Substrat bedruckt.

Der Zwischenträger ist besonders vorteilhaft planeben. Dies bewirkt eine gute Übertragbarkeit der Paste auf den Zwischenträger ohne besondere Beanspruchung des Materials wie des Rakels etc.

Es wird eine Folie gewählt, welche vorzugsweise mit einer Antihaftbeschichtung für die zu wählende aufgedruckte Paste beschichtet ist. Ebenso ist es möglich, einen anderen Zwischenträger als erstes Substrat für die Paste zu verwenden.

Die Trägerfolie als Zwischenträger muss insbesondere folgende Anforderungen erfüllen:
- ausreichende Haftung der flüssigen, lösemittelhaltigen Siebdruckpaste auf der Folie,
- ausreichende Lösemittelbeständigkeit,
- Formstabilität bei der für die Trocknung der Siebdruckpaste erforderlichen Temperatur,
- vollständige und leichte Ablösbarkeit der getrockneten Glaslot-Gründichtung.

Als Folienmaterial hat sich für das Foliengießverfahren Polyethylenterephthalat (PET) bewährt. Die PET-Folie ist vorteilhaft bis zu 115 °C formstabil. Solche Folien können auch für das erfindungsgemäße Verfahren zur Herstellung von Glaslot-Gründichtungen eingesetzt werden.

Die Oberflächeneigenschaften der PET-Folie sollen durch eine zusätzliche Oberflächenbeschichtung in der gewünschten Weise geändert werden, z. B. durch Aufbringung einer geeigneten Antihaftbeschichtung für die Glaslotpaste.

Der Siebdruck als ein Kontaktdruckverfahren erfordert, dass die Paste während des Druckvorgangs in Kontakt mit der Substratoberfläche tritt. Für die Pastenübertragung auf die Oberfläche des Zwischenträgers als erstes Substrat ist deshalb eine ausreichende Haftung der Paste auf dem Zwischenträger-Substrat erforderlich. Andererseits muss sich die getrocknete Paste ohne das Lösungsmittel als erfindungsgemäße Glaslot-Gründichtung leicht von der Trägerfolie als Zwischenträger wieder ablösen lassen. Eine zusätzliche Antihaftbeschichtung des Zwischenträgers bzw. der Folie sollte daher eine ausreichende Haftung der noch feuchten Paste während des Druckvorgangs ermöglichen, und die im Nachgang getrocknete Paste lässt sich dann leicht von der Oberfläche ablösen.

Es kann eine Druckrakel (PUR-Gummi) mit einem speziellen Querschnitt genutzt werden. Durch eine zusätzliche Fase an der Vorderkante der Rakel wird während des Druckvorgangs ein besonders hoher Staudruck erzeugt und die erforderliche Schichtdicke erreicht. Die Rakelgeschwindigkeit sollte an das Siebdruckverfahren sorgfältig angepasst werden. Sie ist deutlich niedriger als sonst beim Siebdruck üblich. Auch als Flutrakel ist abweichend von der Norm eine Gummirakel einzusetzen.

Im ersten Schritt wird die Glaslotpaste auf das Sieb aufgetragen und durch Bewegung der Flutrakel in die Maschen des Siebs gedrückt. Sodann wird der Halter mit den Rakeln in die entgegengesetzte Richtung bewegt und mittels Druckrakel der Kontakt der Glaslotpaste mit dem Zwischenträger erzeugt.

Um die für die hohen Nassschichtdicken erforderliche große Pastenmenge durch die Maschen zu bewegen, muss die Druckrakel einen hohen Staudruck auf die Paste ausüben. Zu diesem Zweck ist die Rakel mit einer 45°-Fase versehen und wird zusätzlich noch um ca. 25° verdreht eingebaut, um den resultierenden Winkel zur Sieboberfläche noch weiter zu verringern. Das Rakelgummi sollte relativ weich sein, z. B. mit Shorehärte 65 Shore A, um sich an kleine Unebenheiten der Sieboberfläche anzupassen, andererseits aber relativ dick sein, um eine Kammerung der Paste durch ein großes Volumen zwischen Sieb und Rakel zu erhalten. Außerdem sollte sich die Rakel beim Druckvorgang nicht zu stark verformen.

Anders als bei Rezepturen für das Foliengießverfahren, bei denen in der Regel niedrig siedende Lösungsmittel eingesetzt werden, sind für das vorliegende Verfahren Pasten mit hoch siedenden Lösungsmitteln besser geeignet. Hierdurch wird die erforderliche Viskositätskonstanz auf dem Sieb während des Druckvorgangs gewährleistet. Es werden entsprechend für das erfindungsgemäße Verfahren nur derartige hoch siedende Lösungsmittel verwendet.

In den Pasten werden erfindungsgemäß Lösungsmittel verwendet, die sehr langsam verdunsten. Die Verdunstungsrate (evaporation rate) ist vorzugsweise größer 300 (Diethylether = 1). Damit wird besonders vorteilhaft bewirkt, dass auch Druckserien gedruckt werden können, wobei die Paste auch nach mehreren Druckvorgängen noch nahezu konstante Druckergebnisse liefert.

Die Wahl des Lösungsmittels und insbesondere auch die des erforderlichen Weichmachers sollte unter dem Gesichtspunkt einer ausreichenden Arbeitssicherheit erfolgen.

Die Glaslotpaste soll mindestens folgende Bestandteile ausgewählt aus Lösungsmittel, Binder, Weichmacher und Glaslotpulver und einen Festkörperanteil von mindestens 60 % bis maximal 95 %, insbesondere 65 % bis 75 % und besonders bevorzugt etwa 65 % bis 72 % wt/wt, insbesondere 65, 66, 67, 68, 69, 70, 71 und 72 % wt/wt, aufweisen.

Vorzugsweise wird für das Siebdruckverfahren als Bindemittel Polyvinylbutyral (PVB) gewählt. Diese Binder sind z. B. unter dem Handelsnamen Mowital© verfügbar.

Die mittlere Molmasse des bei Bindern für Gießfolien eingesetzten Polyvinylbutyrals liegt im Bereich 40.000 g/mol bis 80.000 g/mol. Für das Drucken dicker Schichten ist ein hoher Festkörperanteil der Paste wünschenswert. Um die Viskosität der Paste bei hohem Festkörperanteil niedrig zu halten, wurde vorzugsweise ein Polyvinylbutyral mit einer mittleren Molmasse im Bereich von 28.000 g/mol bis 38.000 g/mol gewählt.

Um eine gute Dispersion des Glaslotpulvers sicherzustellen, wurde als Dispersionshilfsmittel Disperbyk-110 eingesetzt. Gleichzeitig sorgt dieses Dispersionsadditiv für eine Viskositätserniedrigung.

Besonders vorteilhaft wird Mowital© B 30 T als Bindemittel für die Paste gewählt. Überraschend stellte sich in umfangreichen Untersuchungen heraus, dass dieser Binder Glaslot-Gründichtungen hervorbringt, die flexibel handhabbar sind und die sich besonders gut vom bedruckten Substrat herunterlösen lassen ohne zu zerbrechen und über einen gewissen Zeitraum auch gelagert werden können. Im Ergebnis bewirkt diese Maßnahme, dass eine Serienfertigung von Glaslot-Gründichtungen geeignet zur Lagerung und zum Versand ermöglicht wird.

Hierzu wird die Flexibilität der hergestellten Gründichtungen anhand eines 180°-Biegeversuchs über einen Dorn mit definiertem Durchmesser ermittelt. Als Kennwert dient dabei der minimale Biegeradius, beim dem die Gründichtung nicht reißt oder bricht. Für den Test werden 1cm breite Streifen aus der Gründichtung geschnitten und über immer kleinere Dorne bzw. Bohrerschafte um 180° gebogen. Für die erfindungsgemäße Glaslot-Gründichtung ergeben sich nach dieser Methode minimale Biegeradien von etwa 5,5mm bei etwa 500 - 600µm dicken Gründichtungen (maximal 1 Monat gelagert).

Die Wahl von Triethylenglykol-bis-(2-ethylhexanoat) als Weichmacher in der Paste bewirkt vorteilhaft eine mechanische Elastizität bzw. Flexibilisierung der Gründichtungen, wobei es im Gegensatz zu anderen Weichmachern aber als ein nicht gefährlicher Arbeitsstoff eingestuft ist. Ebenfalls geeignet sind z. B. Polyethylenglykole.

Die Wahl von Tripropylenglykolmethylether, Adipinsäuredimethylester, Glykolsäurebutylester (Hydroxyessigsäurebutylester) als Lösungsmittel in der Paste bewirkt vorteilhaft, dass die Lösungsmittel der Paste die Antihaftbeschichtung des Zwischenträgers nicht beschädigen.

Als Lösungsmittel wurden daher hochsiedende Ether und Ester wie z.B. Tripropylenglykolmethylether, Adipinsäuredimethylester, Glykolsäurebutylester (Hydroxyessigsäurebutylester) in Betracht gezogen.

Das Lösungsmittel zur Erzeugung der Gründichtung wird vorzugsweise bei etwa 60 bis 90 °C aus der Paste ausgetrieben. Danach sind die Glaslot-Gründichtungen für einige Zeit mechanisch flexibel handhabbar und lagerfähig.

Es kann Glaslot 48 als Glaslotpulver gewählt werden. Besonders geeignet ist auch das Glaslot mit der Bezeichnung Glaslot H.

In einer besonders vorteilhaften Ausgestaltung der Erfindung sind die erfindungsgemäßen Glaslote mit Fasern stabilisiert, z. B. mit YSZ-Fasern versehen, insbesondere das Glaslot H.

**Tabelle - Glaslot 48:**

| | Mol-% | Gew.-% |
|---|---|---|
| Al₂O₃ | 0,4 | ∼ 0,5 |
| BaO | 18,3 | ∼ 36,7 |
| CaO | 21,6 | ∼ 15,9 |
| SiO₂ | 59,7 | ∼ 46,9 |

Das Glaslot 48 hat sich als gut geeigneter Glaswerkstoff (Glaslot) herausgestellt.

Der eingesetzte Glaswerkstoff, z. B. Glaslot 48 oder Glaslot H wird mit möglichst hoher Reinheit hergestellt. So wird regelmäßig auf die Verwendung von Aluminiumoxid- oder anderen Feuerfesten Tiegeln verzichtet, da der Aluminiumoxid-Gehalt und Spurenverunreinigungen bei diesen Tiegelmaterialien durch den Schmelzprozess erhöht werden.

Der erfindungsgemäße Glaswerkstoff kann insbesondere als Fritte hergestellt und weiter verwendet werden. Als Fritten bezeichnet man die aus Rohstoffen zusammengesetzten Gemenge, welche in einem Fritteofen geschmolzen, abgeschreckt und zerkleinert werden. Man erhält dadurch den Glaswerkstoff in gemahlener Form als Pulver zur weiteren Verwendung.

Für das Gemenge wurden vorzugsweise Rohstoffe mit Reinheiten > 99 % verwendet. Es wurden folgende Chemikalien der Fa. Merck verwendet: Seesand, Bariumcarbonat, Calciumcarbonat, wasserfreies Aluminiumoxid. Der Glaswerkstoff wird bei Temperaturen um ca. 1480°C im Platin-Tiegel induktiv verschmolzen und durch zweimaliges Schmelzen homogenisiert. Die Schmelze wird anschließend in Eiswasser abgeschreckt, und der Gries in einer Achatmühle gemahlen. Die mittlere Partikelgröße liegt bei ca. 10 - 15 µm, der Grobanteil > 32 µm wird durch Sieben entfernt.

Für die Applikation als Lotwerkstoff werden Pasten mit organischen Bindemitteln hergestellt.

Eine erfindungsgemäße Glaslotpaste, umfasst mindestens folgende Bestandteile ausgewählt aus Lösungsmittel, Binder, Weichmacher und Glaslotpulver und hat einen Festkörperanteil von mindestens 60 % bis maximal 95 %.

Es wird besonders vorteilhaft eine Paste mit einer Viskosität von 25-35 Pa•s bei 30,0°C. verwendet (Platte/Platte, Durchmesser Oberplatte 25 mm, Plattenabstand 200 µm).

Es kann insbesondere Mowital© B 30 T als Bindemittel für die Paste genutzt werden.

Das Lösungsmittel wird zur Erzeugung der Glaslot-Gründichtung nach dem Druck auf den Zwischenträger vorzugsweise bei etwa 60 bis 90 °C aus der Paste ausgetrieben.

Die dann durch das Verfahren hergestellte getrocknete Glaslot-Gründichtung ist mechanisch flexibel handhabbar, ausreichend dick und besonders vorteilhaft lagerfähig.

Im Nachgang wird die Glaslot-Gründichtung von dem Zwischenträger als erstem Substrat im Nachgang auf ein zu fügendes Substrat übertragen.

Nach der Trocknung des Drucks und der Abnahme vom Zwischenträger erfolgt also die Übertragung der Gründichtung auf das bzw. die zu fügenden Bauteile. Die hergestellten Glaslot-Gründichtungen sind mechanisch flexibel und erfindungsgemäß besonders dick. Sie können ohne weiteres vor dem Fügeprozess zwischen gelagert oder auch versendet werden.

Besonders vorteilhaft können mit den erfindungsgemäßen Glaslot-Gründichtungen auch nicht planare zu fügende Substrate erfindungsgemäß gefügt werden, wie sie z. B. bei Bauteilen von Brennstoffzellen oder Solarzellen vorkommen. Im Falle der Brennstoffzelle oder eines Stacks aus mehreren Brennstoffzellen werden diese bei der Inbetriebnahme unter Maßgabe eines bestimmten Temperaturprofils auf etwa 850-950 oder sogar 1000°C erhitzt. Der Binder in der getrockneten Glaslot-Gründichtung wird zwischen 400°C und 700°C ausgetrieben. Bei der weiteren Temperaturerhöhung keramisiert das Glaslot und verbindet die zu fügenden Bauteile miteinander. Da Unebenheiten in der Fügefläche durch die Glaslötfügung ausgeglichen werden sollen, liegen die resultierenden Glaslotfügedicken in der Regel bei 100 - 300 µm.

Es können insbesondere Bauteile von Brennstoffzellen oder Solarzellen als zu fügende Substrate verwendet werden. Grundsätzlich ist jede Anwendung für Werkstofffolien, die der Abdichtung oder Verbindung dienen sollen, z. B. in der Solarzellen-Industrie denkbar. Zusätzlich ist auch die Verwendung der erfindungsgemäßen Glaslot-Gründichtungen für eine beliebige Oberflächen-Beschichtung denkbar.

Das erfindungsgemäße Verfahren ist zur Herstellung von Glaslot-Gründichtungen für zu fügende Bauteile, die in Dichtungsebene keine planebene Oberfläche oder auch Fügefläche besitzen (z. B. SOFC-Interkonnektoren) besonders geeignet. Ein zu fügendes Substrat mit Erhöhungen oder Vertiefungen kann bisher durch Siebdruck nicht ohne Probleme bedruckt werden. Erstens ergeben sich keine homogenen Schichtdicken, und zweitens wäre der Sieb- und Rakelverschleiß zu hoch. Auch aus diesem Grunde wird ein planebener Zwischenträger verwendet.

Auch für Bauteile, die bruchempfindlich sind und beim Siebdruckvorgang durch die mechanische Beanspruchung beschädigt werden könnten (z. B. keramische SOFC-Zellen) ist die Verwendung von gedruckten Gründichtungen besonders geeignet.

Auch für Bauteile, die insgesamt oder in Teilen nicht mit Lösemitteln in Berührung kommen dürfen (z. B. SOFC-Bauteile mit Schutzschichten) ist die Verwendung von gedruckten Gründichtungen besonders geeignet. Die Lösemittel in den Lotpasten könnten sonst ohne die Verwendung von Gründichtungen zur Beschädigung der Bauteile bzw. Beschichtungen führen.

Außerdem droht im speziellen Fall einer "Kontakt- oder Schutzschicht auf SOFC-Bauteilen" eine lokale Vermischung von Lotpaste und Beschichtung, die im Fügeverbund schlechtere mechanische Stabilität (Porenbildung) und verringerten elektrischen Widerstand (Kurzschlussgefahr) ergeben kann.

Auch für Bauteile, die aufgrund von Größe, Form und Masse nur schwierig zu behandeln sind ist die Verwendung von Gründichtungen zum Fügen besonders geeignet. So wäre das Positionieren und Entnehmen von großvolumigen und schweren Bauteilen zeitintensiv und aufwändig und der Einsatz von Hebezeugen würde einen entsprechend großen Raum unter der Siebdruckanlage erfordern.

Das Verfahren ist besonders geeignet für die separate Massenproduktion von Gründichtungen (Fließfertigung). Es ist denkbar, dass mehrere auch verschiedene Dichtungen in einem Druckvorgang hergestellt werden, die dann in einer Ofenstrecke getrocknet und schließlich gelagert werden können.

Man kann die Dichtungen auch zu diesem Zweck vorteilhaft auf ein Folienband drucken, welches nach jedem Druck weiterbewegt wird und anschließend durch einen Trockenofen läuft. So kann man ohne Teile bewegen zu müssen, schnell und präzise lager- und versandfähige Glaslot-Gründichtungen herstellen.

Das erfindungsgemäße Verfahren kann dann besonders vorteilhaft als ein Verfahren zum Fügen von Bauteilen für Brennstoffzellen genutzt werden. Ein Fügeverfahren für Brennstoffzellen-Bauteile sieht hierzu vor, Glaslot-Gründichtungen nach dem oben genannten Siebdruckverfahren herzustellen und sodann zwischen die zu fügenden in der Regel nicht planaren Bauteile der Brennstoffzellen zu überführen. Die Glaslot-Gründichtung ist mechanisch flexibel und schmiegt sich an die Oberfläche des ersten Bauteils und dessen Unebenheiten an. Das zweite Bauteil, welches mit dem ersten Bauteil verbunden werden soll, wird hierauf aufgesetzt. Nach Verbrennen des Binders ab etwa 400°C erfolgt die Fügung sodann bei ausreichender Temperatur.

### Ausführungsbeispiele

Im Weiteren wird die Erfindung an Hand von Ausführungsbeispielen und der beigefügten Figuren näher erläutert, ohne dass es hierdurch zu einer Beschränkung der Erfindung kommen soll.

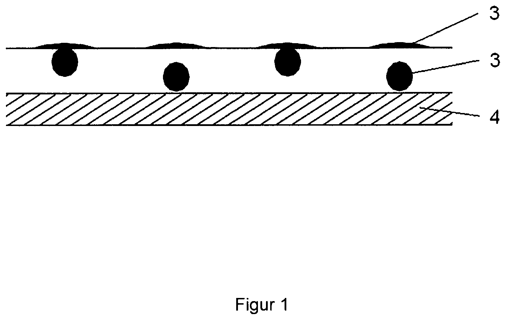

Figur 1 zeigt den Querschnitt durch ein Siebdrucksieb. Die Siebfäden 3 sind in der Schnittzeichnung als schwarze Kreise dargestellt. Unterhalb des Siebgewebes ist eine zusätzliche Beschichtung 4 als schraffierte Fläche dargestellt. Dargestellt ist lediglich die Beschichtung 4 unterhalb der Siebfäden 3 nicht jedoch in den Maschen, wenngleich diese selbstverständlich vorhanden ist.
   Diese Beschichtung 4 gewährleistet vorteilhaft einen definierten Abstand zwischen Sieb 3 und Zwischenträger-Substrat (nicht dargestellt) beim Druckvorgang.

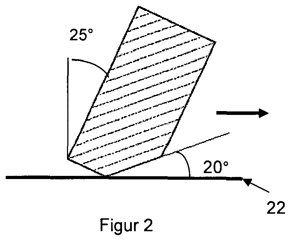

Figur 2 zeigt die Schnittdarstellung der verwendeten Druckrakel aus PUR-Gummi. Am oberen rechteckigen Teil wird das Rakelgummi in einen Maschinenhalter gespannt. Der untere Teil des Rakel-Gummis ragt aus dem Halter heraus. Um den Staudruck beim Druckvorgang zu erhöhen, ist das Rakelgummi unter einem Winkel von 45° angefast. Zusätzlich wird der Maschinenhalter mit Rakel unter einem Winkel von 25° im Uhrzeigersinn gedreht. Somit setzt die Rakel beim Druckvorgang unter einem resultierenden Winkel von etwa 20° auf die Sieboberfläche 22 auf und transportiert (bei der Druckbewegung nach rechts) die Paste über und durch das Sieb.

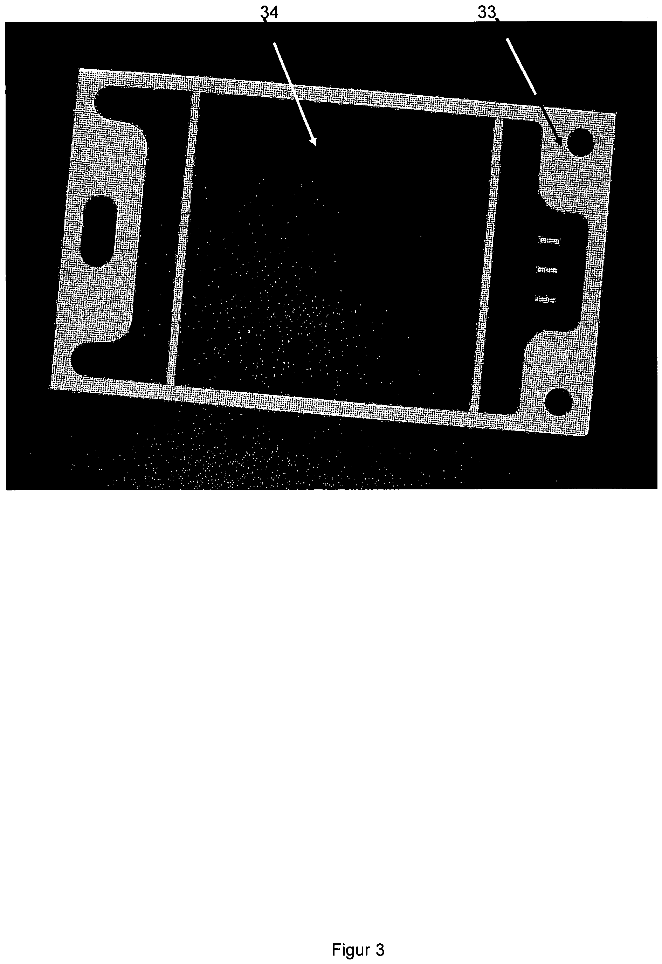

Figur 3 zeigt das verwendete Sieb. Gezeigt ist eine Fotografie der Siebunterseite mit dem dunkleren Fotolack 34 als EOM-Beschichtung. In den offenen Motivräumen ist das hellere Polyester-Siebgewebe 33 zu erkennen. Die Motivaußenmaße betragen 365 x 222 mm.

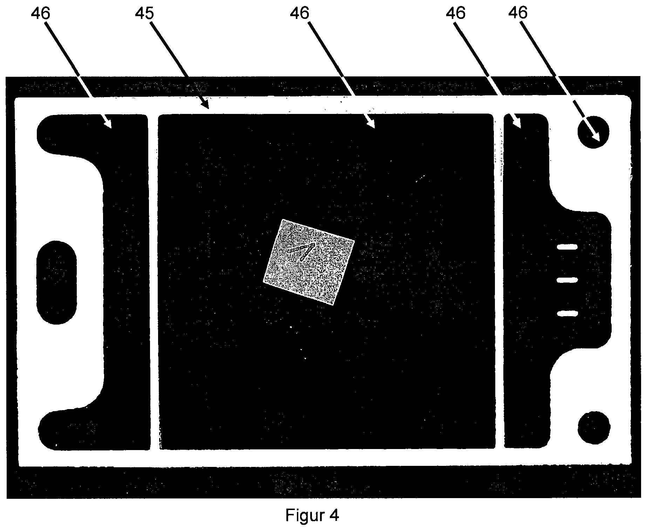

Figur 4 zeigt eine Fotografie der Glaslot-Gründichtung Nr.1, hergestellt mit dem Sieb nach Figur 3 und der Pastenrezeptur FZT02-3. Die Glaslot-Gründichtung 45 ist hell und nach der Trocknung etwa 500 µm dick. Auf diesem Bild liegt die Gründichtung noch auf der transparenten Zwischenträgerfolie 46, die als eine dunkle Unterlage erkennbar ist.

### 1. Die Glaslotpaste

Eine Versuchsrezeptur mit Mowital© B 30 HH als Bindemittel in der Glaslotpaste ließ sich nicht ohne Zerstörung von der Trägerfolie ablösen. Durch laufend angepasste Versuche wurde aber überraschend gefunden, dass Mowital© B 30 T, welches sich im Aufbau kaum von Mowital© B 30 HH unterscheidet, diesen Nachteil nicht aufweist. Mowital© B 30 HH löst sich in dem als Lösungsmittel eigentlich vorgesehen Adipinsäure-dimethylester, Mowital© B 30 T nicht. Deshalb kam als Lösungsmittel Glykolsäurebutylester für die vorgesehene Rezeptur in Frage.

**A. Beispielrezeptur 1**

| Komponente | Masse in g |
|---|---|
| Glaslot 48 | 68,68 |
| Mowital© B 30 T | 4,07 |
| Glykolsäurebutylester | 24,11 |
| Disperbyk-110 | 0,89 |
| Triethylenglykol-bis-(2-ethylhexanoat) | 2,25 |
| Summe | 100,00 |

Glaslot 48 wurde verwendet. Dies ist ein Barium-Calcium-Aluminium-Sillikat-Glas, welches nach dem Erschmelzen gemahlen wurde und im Mittel eine Partikelgröße von 12 µm aufweist. Pastenviskosität (Platte/Platte, Durchmesser Oberplatte 25 mm, Plattenabstand 200 µm) 25-35 Pa•s bei 30,0°C.

Die Herstellung der Glaslotpaste erfolgt in zwei Schritten. Zunächst wird eine Binder-Lösung angesetzt. Die für die Beispiel-Rezeptur verwendete Binder-Lösung hat die Bezeichnung BM17.

Herstellung des Bindemittels BM17

| Nr. | Komponente | Menge in g | | | |
|---|---|---|---|---|---|
| 1 | Mowital© B 30 T | 34,00 | 25,50 | 17,00 | 4,25 |
| 2 | Butyl glycolate | 166,00 | 124,50 | 83,00 | 20,75 |
| | | 200,00 | 150,00 | 100,00 | 25,00 |

Ansatz von 25 g: 4,25 g Mowital© B 30 T werden in einer Kristallisierschale mit 50 ml Inhalt abgewogen. Weiter werden in einem Becherglas mit 100 ml Inhalt 20,75 g Butylglycolate abgewogen und erwärmt. Nun wird das Mowital unter Rühren mit einem Magnetrührer nach und nach eingestreut, das Becherglas mit einem Uhrglas abgedeckt und die Mischung weiter bis auf ca. 60°C erwärmt. Die Mischung wird unter Rühren ca. 40 Minuten bei dieser Temperatur gehalten, bis das Mowital in Lösung gegangen ist und dann die Wärmezufuhr unterbrochen.

Ansatz von 150 g: 25,50 g Mowital© B 30 T werden in einer Kristallisierschale mit 100 ml Inhalt abgewogen. Weiter werden in einem Becherglas mit 500 ml Inhalt 124,50 g Butylglycolate abgewogen und erwärmt. Nun wird das Mowital unter Rühren mit einem Magnetrührer nach und nach eingestreut, das Becherglas mit einem Uhrglas abgedeckt und die Mischung weiter bis auf ca. 60°C erwärmt. Die Mischung wird unter Rühren ca. 40 Minuten bei dieser Temperatur gehalten, bis das Mowital in Lösung gegangen ist und dann die Wärmezufuhr unterbrochen.

In einem zweiten Schritt wird die Glaslotpaste erstellt. Die Beispiel-Rezeptur wird mit FZT02-3 bezeichnet. Anhand der beigefügten Arbeitsvorschrift FZT02-3 wird die Herstellung einer solchen druckbaren Paste nachvollziehbar.

Arbeitsvorschrift FZT02-3 - Version 1.1 vom 21.08.12
Herstellung der Glaslotpaste FZT02-3 (68,7 % Festkörperanteil)

| Nr. | Komponente | Menge in g | | | |
|---|---|---|---|---|---|
| 1 | Glaslotpulver Q153T180411 | 274,72 | 206,04 | 103,02 | 68,68 |
| 2 | Bindemittel BM17 | 95,96 | 71,97 | 35,99 | 23,99 |
| 3 | Butylglycolate | 16,76 | 12,57 | 6,29 | 4,19 |
| 4 | Disperbyk-110 | 3,56 | 2,67 | 1,34 | 0,89 |
| 5 | Tri(ethylene glycol) bis(2-ethylhexanoate) | 9,00 | 6,75 | 3,38 | 2,25 |
| | | 400,00 | 300,00 | 150,00 | 100,00 |

| | | | | | |
|---|---|---|---|---|---|
| Glaslotcharge: Q153T180411 (Lot 48 ohne Co-Oxid - Zusatz) | | | | | |

Ansatz von 150 g: 103,02 g Glaslotpulver 48 werden in einer Kristallisierschale von 200 ml Inhalt abgewogen. Nun werden 35,99 g Bindemittel BM17 und 6,29 g Butylglycolate in einem Mörser vorgelegt. Zu dem Bindemittel werden nun 1,34 g Disperbyk-110 mit einer Pipette zugetropft und sofort vermischt. Anschließend wird das Glaslotpulver in kleinen Portionen mit dem Bindemittel im Mörser nach und nach vermischt. Abschließend werden 3,38 g Komponente 5 mit einer Pipette zugetropft und sofort vermischt. Die Paste wird dann noch zusätzlich weitere 5 Minuten im Mörser homogenisiert und danach in eine Plastikdose von 100 ml Inhalt gefüllt. Abschließend wird die Paste in dieser Dose 2 mal 50 s (mit kurzer Zwischenpause) mit Ultraschall behandelt. Hierbei ist darauf zu achten, dass der Ultraschallfinger möglichst wenig die Wände und den Boden der Dose berührt.

Die Höhe des Festkörperanteils der Siebdruckpaste beträgt 68,7 %.

### B. Beispielrezeptur 2

Herstellung eines Bindemittels BM17-3

| Nr. | Komponente | Menge in g | | | |
|---|---|---|---|---|---|
| 1 | Mowital B 30 T | 54.30 | 36.20 | 18.10 | 4.53 |
| 2 | Butyl glycolate | 245.70 | 163.80 | 81.90 | 20.48 |
| | | 300.00 | 200.00 | 100.00 | 25.00 |

| | | | | | |
|---|---|---|---|---|---|
| Ansatz von 100 g / 200 g / 300 g | | | | | |

Das Mowital wird in einer Kristallisierschale mit 50 ml / 100 ml Inhalt abgewogen. Weiter wird in einem Becherglas mit 400 ml Inhalt das Butylglycolate abgewogen. Anschließend wird die Heizung eingeschaltet und das Butylglycolate bis auf 35 °C erwärmt. Die Temperatur wird mit einem Kontaktthermometer geregelt. Das Mowital wird nun unter Rühren mit einem Magnetrührer (35 mm x 16 mm) in Portionen in das Becherglas über ein Sieb gleichmäßig eingestreut. Die Rührgeschwindigkeit wird auf Position 4 eingestellt und mit steigender Viskosität langsam bis auf 10 erhöht.

Die nächste Portion Mowital wird erst zugegeben, wenn die vorherige Portion verteilt und benetzt ist. In der Mitte der Flüssigkeitsoberfläche bildet sich ein Strudel. Sobald die zugegebene Mowitalmenge vom Strudel aufgenommen wurde, neues Mowital einstreuen, sodass der Strudel erhalten bleibt. Andernfalls bildet sich eine glatte Flüssigkeitsoberfläche, die das Einstreuen und Benetzen erschwert.

Wenn ca. zwei Drittel der gesamten Mowitalmenge zugegeben wurden (nach ungefähr 20 Minuten), wird die Temperatur auf 50 °C erhöht und die Restmenge Mowital eingestreut.

Wenn alles Mowital zugegeben ist, wird das Thermometer auf 60 °C gestellt und die Lösung weiter erwärmt. Es wird nun weitere 75 Minuten gerührt, dann die Heizung abgeschaltet und solange weiter gerührt, bis alles Mowital gelöst ist (ca. 2 Stunden). Die Rührgeschwindigkeit wird hierbei auf Position 3 bis 4 gestellt, um die Bildung von Luftblasen einzuschränken.

Anschließend wird die Bindemittellösung in eine Vorratsflasche gefüllt.

Zusätzlich zum schon beschriebenen Glaslot 48 hat sich auch eine Glaslot-Komposition aus Glas H mit 13% YSZ-Fasern als geeignet zur Herstellung von Gründichtungen herausgestellt.

| Glaslot | BaO [Gew. -%] | Ca O [Ge w.-%] | SiO₂ [Gew. -%] | Ausdehnungskoeffizient bei 600°C [10⁻⁶ K⁻¹] | dilatometrische Erweichungstemperatur (T_{D}) [°C] | Fügetemperatur [°C] |
|---|---|---|---|---|---|---|
| H | 48,21 | 6,05 | 29,75 | 9,5 | 714 | 820 |

Als Additive (falls notwendig) des Glaslot H können Al₂O₃, B₂O₃, V₂O₅ ZnO verwendet werden.

Die Herstellung des Glaslotpulvers (Erschmelzung, Fritten, Mahlen) erfolgt analog dem Verfahren zur Herstellung des schon beschriebenen Glaslots 48. Das Glaslot-H-Pulver wird nach der Mahlung aber nicht gesiebt und weist anschließend ebenfalls eine mittlere Partikelgröße von ca. 10 - 15µm auf.

Diesem Glaslotpulver werden modifizierte YSZ-Fasern (Gew.-Anteil 13%) zugesetzt.

Die Fasern mit der Bezeichnung ZYBF-2 wurden von Zircar Zirconia, Inc.;P.O. Box 287;Florida, NY 10921-0287 geliefert. Die Fasern wurden durch Mahlung in einer Planetenmühle (Fritsch Pulverisette; BJ.2005; Nr. 05.5000/00590) modifiziert. Es werden jeweils 5g Fasern mit 30g Aceton mit 16 Achatkugeln (mit 19mm Durchmesser) in Achatbechern 10min lang bei 300rpm gemahlen.

Nominelle Zusammensetzung ZYBF-2 nach Datenblatt (Gew.% kalziniert ½ Stunde bei 950 ° C): ZrO₂ = 90%; Y₂O₃=10%; Spurenelemente<1%; Schüttdichte, g / cm ³ (PCF) = 0,34 (21); Gewichts-% H₂O= 0,05-0,2; Gewicht% Cl^{- =} < 0,1; Glühverlust, ½ Stunde bei 950 ° C = 0,1 bis 0,4; Spezifische BET-Fläche, m²/g = 4.

Danach wird das Mahlgut bei 60 °C mindestens 24h getrocknet. Die Herstellung der Paste erfolgt gemäß Rezeptur FZT13(1.1). Die dafür verwendete Binderlösung ist in Rezeptur BM17-3(3.3) beschrieben.

Herstellung der Glaslotpaste FZT13 mit 71,8 % Festkörperanteil:

| Nr. | Komponente | Menge in g | | | | |
|---|---|---|---|---|---|---|
| 1 | Glaslotpulver H | 249.88 | 187.41 | 124.94 | 62.47 | 15.62 |
| 2 | Fasern ZYBF-2 (gemahlen) | 37.32 | 27.99 | 18.66 | 9.33 | 2.33 |
| 3 | Bindemittel BM17-3 | 92.32 | 69.24 | 46.16 | 23.08 | 5.77 |
| 4 | Butyl glycolate | 7.36 | 5.52 | 3.68 | 1.84 | 0.46 |
| 5 | Disperbyk-110 | 3.68 | 2.76 | 1.84 | 0.92 | 0.23 |
| 6 | Poly(ethylene glycol) bis(2-ethylhexanoate) | 9.44 | 7.08 | 4.72 | 2.36 | 0.59 |
| | | 400.00 | 300.00 | 200.00 | 100.00 | 25.00 |

| | | | | | | |
|---|---|---|---|---|---|---|
| Glaslotcharge: H | | | | | | |

Ansatz von 25 g / 100 g / 200 g / 300 g / 400 g

Das Glaslotpulver H und die Fasern ZYBF-2 werden in einer Kristallisierschale von 100 ml / 200 ml Inhalt abgewogen und anschließend gemischt. Nun wird das Bindemittel BM17-3 und das Butyl glycolate in einem Mörser vorgelegt. Zu der Mischung wird nun das Disperbyk-110 mit einer Pipette zugetropft und sofort vermischt. Anschließend wird die Pulvermischung in kleinen Portionen mit dem Bindemittel im Mörser nach und nach vermischt. Abschließend wird die Komponente 6 mit einer Pipette zugetropft und sofort vermischt. Die Paste wird dann noch zusätzlich weitere 5 Minuten im Mörser homogenisiert und danach, bis Ansatzgröße 300 g, in ein oder zwei Plastikdosen von 50 ml / 100 ml Inhalt gefüllt. Abschließend (der 25 g Ansatz bleibt unbehandelt) wird die Paste in der Dose 2 mal 50 s (mit kurzer Zwischenpause) mit Ultraschall behandelt. Hierbei ist darauf zu achten, dass der Ultraschallfinger möglichst wenig die Wände und den Boden der Dose berührt.

Der 400 g Ansatz wird in ein Becherglas von 400 ml Inhalt überführt und im Becherglas 2 mal 60 s (mit kurzer Zwischenpause) mit Ultraschall behandelt. Hierbei ist darauf zu achten, dass der Ultraschallfinger möglichst wenig die Wände und den Boden des Glases berührt. Das Glas wird dann mit einem Uhrglas abgedeckt und noch am gleichen Tag zum Siebdruck verwendet.

### 2. Der Zwischenträger (Trägerfolie)

Als Trägerfolie wurde eine Folie der Mitsubishi Polyester Film GmbH verwendet; Hier: silikonisierte PET-Folie Hostaphan RN 75 2SLK, Dicke 75 µm. Diese Folie dient im Siebdruckverfahren als erstes Substrat bzw. Zwischenträger.

### 3. Das Sieb

Siebausführung (siehe Fig.1); Polyestergewebe 8-300. Siebunterseite zusätzlich beschichtet (emulsion over mesh EOM) mit handelsüblichen Fotolack. Dicke der zusätzlichen Schicht: 230-350 µm.

Das Material der Siebbeschichtung an der Unterseite war ein handelsüblicher Fotolack, der vom Siebhersteller in Abhängigkeit der Anforderungen ausgewählt wird. Die Anforderungen waren z. B. die Lösemittelbeständigkeit, die Beschichtungsdicke und der Siebtyp.

**Tabelle: Siebdaten**

| | |
|---|---|
| Gewebe | 8-300 |
| Bindung | 1/1 |
| Fäden pro cm | 8 |
| Fadendurchmesser d [µm] | 300 |
| Emulsion Over Mesh EOM [µm] | 230-350 |

Der Winkel zwischen Fadenrichtung und Rahmenlängsseite betrug 7°. Der Winkel zwischen Motiv und der Rahmenlängsseite betrug 5° (Motivdrehung). Das Fadenmaterial bestand aus Polyester.

Es wurde eine Spezialrakel aus PUR-Gummi (siehe Fig. 2), Shorehärte 65 Shore A, mit rechteckigem Querschnitt verwendet. Die Dicke betrug 17 mm, die Fase mit halber Dicke weist einen Winkel von 45° auf. Der Winkel zwischen der Rakelachse (im Querschnitt von oben nach unten) und dem Sieb während des Siebdruckverfahrens betrug 25°. Die Rakelgeschwindigkeit lag bei ca. 90 mm/s. Die Flutrakel bestand aus PUR-Gummi, rechteckiger Querschnitt, Dicke 9 mm, Shorehärte 90 Shore A. Der resultierende Winkel zur Sieboberfläche betrug 20°.

Die Flut- und die Druckrakel bewegen die Paste über bzw. durch das Sieb. In dem vorliegenden Fall wurde eine Druckrakel mit Fase verwendet, was den Staudruck beim Druckvorgang erhöht und somit den Pastendurchsatz steigert.

Die entstehenden, getrockneten Glaslot-Gründichtungen hatte eine Dicke von ca. 600 µm und konnte ohne weiteres für Monate gelagert werden. Sie wurde bereits verwendet um erfolgreich nicht planebene Bauteile für Brennstoffzellen mit einander zu fügen.

Das Verfahren hierfür sieht vor, eine durch das erfindungsgemäße Verfahren hergestellte erfindungsgemäße mechanisch flexible Glaslot-Gründichtung zwischen die zu fügenden Bauteile einer Brennstoffzelle einzulegen. Bei der Inbetriebnahme wird durch das Temperaturprofil der Binder ausgehärtet und die Bauteile erfindungsgemäß gefügt.

## Patentansprüche

1. Siebdruckverfahren zur Herstellung einer Glaslot-Gründichtung, bei dem eine Glaslotpulver aufweisende Paste auf die Oberfläche eines Siebs aufgetragen wird, welches an seiner Unterseite und in den Siebmaschen Bereiche mit einer für die Paste undurchlässigen Beschichtung als Maske aufweist, und die Paste mit einer Rakel durch das Sieb auf ein Substrat gedrückt und anschließend getrocknet wird, wobei der Druck auf einen Zwischenträger als Substrat erfolgt, von dem sich die getrocknete Glaslot-Gründichtung vollständig ablösen lässt und die Rakel als Druckrakel eine zusätzliche Fase an der Vorderkante aufweist.

2. Verfahren nach Anspruch 1,
**gekennzeichnet dadurch, dass**
ein Sieb gewählt wird, welches eine Beschichtung an der Unterseite der Siebfäden von mindestens 100 µm bis maximal 700 µm Dicke und vorzugsweise von etwa 300 µm bis 400 µm Dicke aufweist.

3. Verfahren nach Anspruch 1 oder 2,
**gekennzeichnet dadurch, dass**
die Beschichtung des Siebs aus einem Fotolack besteht.

4. Verfahren nach einem der vorhergehenden Ansprüche,
**dadurch gekennzeichnet, dass**
ein Druckbild aus getrockneter Paste von etwa 100 µm bis 1000 µm Dicke, insbesondere etwa 600 µm Dicke auf dem Zwischenträger als Substrat erzeugt wird.

5. Verfahren nach einem der vorhergehenden Ansprüche,
**dadurch gekennzeichnet, dass**
eine Kunststofffolie oder eine Metallfolie oder Backpapier als Zwischenträger bedruckt wird.

6. Verfahren nach vorherigem Anspruch,
**gekennzeichnet durch**
Wahl einer Folie mit einer Antihaftbeschichtung für die aufgedruckte Paste.

7. Verfahren nach einem der vorhergehenden Ansprüche,
**dadurch gekennzeichnet, dass**
die Glaslotpaste mindestens folgende Bestandteile ausgewählt aus Lösungsmittel, Binder, Weichmacher und Glaslotpulver und einen Festkörperanteil von mindestens 60 % bis maximal 95 % aufweist.

8. Verfahren nach einem der vorherigen Ansprüche,
**gekennzeichnet durch**
Glaslot, welches faserstabilisiert ist.

9. Verfahren nach einem der vorhergehenden Ansprüche,
**dadurch gekennzeichnet, dass**
eine Gummirakel mit Fase von etwa 45° in einem Winkel von etwa 25°, bezogen auf die Längsachse des Rakels, auf die Sieboberfläche aufgesetzt wird und die Paste durch Bewegen des Rakels durch das Sieb auf das Zwischenträger-Substrat gedrückt wird.

10. Verfahren nach einem der vorhergehenden Ansprüche,
**dadurch gekennzeichnet, dass**
die Rakel mit einer Geschwindigkeit von maximal 180, insbesondere 120 mm/s über das Substrat bewegt wird.

11. Verfahren nach einem der vorhergehenden Ansprüche,
**gekennzeichnet durch**
Wahl eines Polyvinylbutyrals mit einer mittleren Molmasse von 28.000 g/mol bis 38.000 g/mol als Bindemittel für die Paste.

12. Glaslotpaste, umfassend
Lösungsmittel, Binder, Weichmacher und Glaslotpulver, wobei die Glaslotpaste einen Festkörperanteil von 60 % bis 95 % wt/wt aufweist, und wobei der Binder Polyvinylbutyral mit einer mittleren Molmasse von 28.000 g/mol bis 38.000 g/mol als Bindemittel für die Paste aufweist.

13. Glaslotpaste nach Anspruch 12,
**gekennzeichnet durch**
faserstabilisiertes Glaslot, z. B. ZYBF-2 als Faser.

14. Glaslot-Gründichtung, hergestellt durch ein Verfahren nach einem der vorhergehenden Ansprüche 1-11.

15. Verwendung einer Glaslot-Gründichtungen nach Anspruch 14,
**gekennzeichnet durch**
Einlegen der getrockneten Glaslot-Gründichtung zwischen zu fügende Bauteile einer Brennstoffzelle, die in Dichtungsebene keine planebene Oberfläche aufweisen und Aufheizen der gefügten Bauteile auf etwa 850-950°C, wobei der Binder in der getrockneten Glaslot-Gründichtung ausgetrieben wird und bei einer weiteren Temperaturerhöhung keramisiert und die zu fügenden Bauteile miteinander verbindet, da Unebenheiten in der Fügefläche **durch** die Glaslötfügung ausgeglichen werden, wobei die resultierenden Glaslotfügedicken zwischen 100 - 300 µm liegen.

## Claims

1. Screen printing process for producing a glass solder green seal, in which a paste that has a glass solder powder is applied to the surface of a screen, which on the bottom and in the screen mesh has areas with a coating that is impermeable for the paste as a mask, and the paste is pushed through the screen onto a substrate with a scraper and then dried, in which the pressure is applied to an intermediate carrier as a substrate, from which the dried glass solder green seal may be detached completely, and the scraper has an additional chamfer on the front edge as a pressure scraper.

2. Method according to claim
1, **characterised in that**
a screen is selected, which has a coating on the bottom of the screen threads of at least 100 µm to a maximum of 700 µm thick and preferably from about 300 µm to 400 µm thick.

3. Method according to claim 1
or 2, **characterised in that**
the coating of the screen consists of a photoresist.

4. Method according to one of the previous claims,
**characterised in that**
a print image is produced from dried paste about 100 µm to 1000 µm thick, particularly about 600 µm thick, on the intermediate carrier as a substrate.

5. Method according to one of the previous claims,
**characterised in that**
a plastic film or a metal foil or baking paper is printed on as an intermediate carrier.

6. Method according to the previous claim,
**characterised by**
selection of a film or foil with non-stick coating for the paste imprinted.

7. Method according to one of the previous claims,
**characterised in that**
the glass solder paste has at least the following components selected from solvents, binders, softeners and glass solder powder and a solid content of at least 60% to a maximum of 95%.

8. Method according to one of the previous claims,
**characterised by**
glass solder, which is fibre-stabilised.

9. Method according to one of the previous claims,
**characterised in that**
a rubber scraper with a chamfer of about 45° is placed on the screen surface at an angle of about 25° with reference to the longitudinal axis of the scraper and the paste is pressed through the screen onto the intermediate carrier substrate by moving the scraper.

10. Method according to one of the following claims,
**characterised in that**
the scraper is moved over the substrate at a maximum speed of 180, particularly 120 mm/s.

11. Method according to one of the previous claims,
**characterised by**
selection of a polyvinyl butyral with an average molar mass of 28,000 g/mol to 38,000 g/mol as a binding agent for the paste.

12. Glass solder paste, comprising
solvent, binder, softener and glass solder powder, in which the glass solder paste that has a solid content of 60% to 95% wt/wt and in which the binder polyvinyl butyral that has an average molar mass of 28,000 g/mol to 38,000 g/mol is the binding agent for the paste.

13. Glass solder paste according to claim 12,
**characterised by**
fibre-stabilised glass solder, such as ZYBF-2 for example, as the fibre.

14. Glass solder green seal, produced by a process according to one of previous claims 1-11.

15. Use of a glass solder green seal according to claim 14,
**characterised by**
inserting the dried glass solder green seal between components of a fuel cell to be joined, which do not have a flat surface in the sealing plane, and heating the joined components to about 850-950°C,
in which the binder in the dried glass solder green seal is driven out and ceramicised with a further increase in temperature and connects the components to be joined with each other, as irregularities in the joining surface are evened out by the glass solder joining, in which the resulting glass solder thicknesses are between 100 - 300 µm.

## Revendications

1. Procédé de sérigraphie servant à fabriquer un joint vert en brasure de verre, dans le cadre duquel une pâte contenant de la poudre de brasure de verre est appliquée sur la surface d'un tamis, qui présente, au niveau de son côté inférieur et dans les mailles de tamis, des zones pourvues d'un revêtement ne laissant pas passer la pâte faisant office de masque, et la pâte est poussée à l'aide d'une raclette à travers le tamis sur un substrat et est immédiatement après séchée, dans lequel la pression est effectuée sur un support intermédiaire faisant office de substrat, duquel le joint verre en brasure de verre séché peut être totalement décollé et la raclette présente, en tant que raclette de pression, un biseau supplémentaire au niveau de l'arête avant.

2. Procédé selon la revendication 1,
**caractérisé en ce**
**qu'**un tamis est choisi, lequel présente un revêtement au niveau du côté inférieur des fils de tamis d'une épaisseur d'au moins 100 µm et pouvant aller jusqu'à 700 µm au maximum et, de préférence d'une épaisseur allant d'environ 300 µm à 400 µm.

3. Procédé selon la revendication 1 ou 2,
**caractérisé en ce**
**que** le revêtement du tamis est constitué d'une résine photosensible.

4. Procédé selon l'une quelconque des revendications précédentes,
**caractérisé en ce**
**qu'**une image d'impression composée de la pâte séchée d'une épaisseur allant d'environ 100 µm à 1 000 µm, en particulier d'une épaisseur d'environ 600 µm, est produite sur le support intermédiaire faisant office de substrat.

5. Procédé selon l'une quelconque des revendications précédentes,
**caractérisé en ce**
**qu'**un film en plastique ou un film en métal ou un papier de cuisson est imprimé en tant que support intermédiaire.

6. Procédé selon la revendication précédente, **caractérisé**
**par** le choix d'un film pourvu d'un revêtement anti-adhésif pour la pâte appliquée par impression.

7. Procédé selon l'une quelconque des revendications précédentes,
**caractérisé en ce**
**que** la pâte de brasure de verre présente au moins des constituants suivants choisis parmi les solvants, les liants, les plastifiants, la poudre de brasure de verre et une fraction de corps solide allant d'au moins 60 % à 95 % au maximum.

8. Procédé selon l'une quelconque des revendications précédentes,
**caractérisé par**
une brasure de verre, qui est stabilisée par des fibres.

9. Procédé selon l'une quelconque des revendications précédentes,
**caractérisé en ce**
**qu'**une raclette en caoutchouc pourvue d'un biseau d'environ 45° est posée, selon un angle d'environ 25° par rapport à l'axe longitudinal de la raclette, sur la surface de tamis, et en ce que la pâte est poussée par le déplacement de la raclette à travers le tamis sur le substrat de support intermédiaire.

10. Procédé selon l'une quelconque des revendications précédentes,
**caractérisé en ce**
**que** la raclette est déplacée à une vitesse de maximum 180, en particulier de 120 mm/s, au-dessus du substrat.

11. Procédé selon l'une quelconque des revendications précédentes,
**caractérisé par**
le choix d'un polyvinyle de butyral présentant une masse molaire allant de 28 000 g/mol à 38 000 g/mol faisant office de liant pour la pâte.

12. Pâte de brasure de verre, comprenant
des solvants, des liants, des plastifiants et de la poudre de brasure de verre, dans laquelle la pâte de brasure de verre présente une fraction de corps solide allant de 60 % à 95 % en poids, et dans laquelle le liant présente du polyvinyle de butyral présentant une masse molaire moyenne allant de 28 000 g/mol à 38 000 g/mol faisant office de liant pour la pâte.

13. Pâte de brasure de verre selon la revendication 12,
**caractérisée par**
de la brasure de verre stabilisée aux fibres, par exemple du ZYBF-2 en tant que fibre.

14. Joint verre de brasure de verre fabriqué par un procédé selon l'une quelconque des revendications 1 à 11.

15. Utilisation d'un joint vert de brasure de verre selon la revendication 14,
**caractérisée par**
l'insertion du joint vert de brasure de verre entre des composants à assembler d'une pile à combustible, qui ne présentent, dans le plan de joint, aucune surface plane, et le réchauffement des composants assemblés à une température d'environ 850 à 950 °C, dans laquelle le liant est chassé dans le joint verre de brasure de verre séché et est céramisé lors de la poursuite de l'augmentation de température et relie les composants à assembler entre eux, les irrégularités dans la face d'assemblage étant compensées par la jonction en brasure de verre, dans laquelle les épaisseurs de jonction en brasure de verre en résultant sont situées entre 100 et 300 µm.
